# EUROPÄISCHE PATENTSCHRIFT

(11) **EP 1 072 827 B1**
(45) Veröffentlichungstag und Bekanntmachung des Hinweises auf die Patenterteilung: **17.11.2004**
(21) Anmeldenummer: 00112644.0
(22) Anmeldetag: 15.06.2000
(51) Int. Cl.: F16J 15/08

(54) **Matallische Zylinderkopfdichtung**
Metallic cylinder head gasket
Joint de culasse métallique

(30) Priorität: 24.07.1999 DE 19934822
(43) Veröffentlichungstag der Anmeldung: 31.01.2001
(73) Patentinhaber: Federal-Mogul Sealing Systems GmbH, 57562 Herdorf (DE)
(72) Erfinder: Schmitt, Klaus, Dipl.-Ing., 57520 Grünebach (DE)

(56) Entgegenhaltungen:
- EP-A- 0 486 817
- EP-A- 0 860 635
- PATENT ABSTRACTS OF JAPAN vol. 1996, no. 04, 30. April 1996 (1996-04-30) -& JP 07 332500 A (JAPAN METAL GASKET CO LTD), 22. Dezember 1995 (1995-12-22)
- PATENT ABSTRACTS OF JAPAN vol. 018, no. 269 (M-1609), 23. Mai 1994 (1994-05-23) & JP 06 042647 A (JAPAN METAL GASKET CO LTD), 18. Februar 1994 (1994-02-18)
- PATENT ABSTRACTS OF JAPAN vol. 1996, no. 03, 29. März 1996 (1996-03-29) & JP 07 293700 A (TAIHO KOGYO CO LTD), 7. November 1995 (1995-11-07)

## Beschreibung

Die Erfindung betrifft eine Zylinderkopfdichtung mit einer Grundplatte aus Metall mit mindestens einer Brennkammeröffnung und mit einer ringförmigen Auflage aus Metall, die um die Brennkammeröffnung herum angeordnet ist und mit der Grundplatte verschweißt ist, wobei eine Vielzahl von Schweißpunkten hinter- oder nebeneinanderliegend angeordnet sind und die Schweißpunkte so ausgebildet sind, dass an einer Oberfläche der Grundplatte ein Schweißpunktdurchmesser d ausgebildet ist, der kleiner ist als der Schweißpunktdurchmesser D an einer Oberfläche der Auflage.

Bei gattungsgemäßen Zylinderkopfdichtungen sind am Randbereich der Brennkammeröffnungen Überstände in Form von Metallauflagen angeordnet, die in diesem Bereich als Verpressungsbegrenzer für Sicken fungieren. Durch diese Überstände wird eine hohe Pressung, hervorgerufen durch die Befestigungsschrauben, am Brennraum ermöglicht, ohne dass die Sicken zwischen dem Zylinderblock und Zylinderkopf vollkommen plattgedrückt werden können.

Die EP 0 468 526 A1 offenbart eine metallische Zylinderkopfdichtung, bei der um jede Brennraumöffnung eine ringförmige Scheibe auf der Grundplatte der Dichtung aufgeschweißt ist. Die Ringscheibe wird als vorgefertigtes Bauteil auf einer Platte der Dichtung mittels eines Stempels gehalten und anschließend durch ein Laser-Schweißverfahren mit der Platte verbunden. Die Schweißnaht ist dabei als kontinuierliche, durchgehende Schweißraupe ausgebildet. Beim Aufschweißen von dünnen Auflagen besteht die Gefahr, dass zu viel Wärmeenergie in die Metallplatten eingebracht wird, wodurch sich die Auflagen und auch die Metallplatten verformen. Um möglichst wenig Wärme in die Bauteile einzuführen, wurde auch schon gemäß EP 0486817 A vorgeschlagen, die Schweißnaht als Schweißpunkte auszubilden und zwar so, dass sich die einzelnen Schweißpunkte überlappen. Die Überlappung der Schweißpunkte soll dafür sorgen, dass eine möglichst gasdichte Verbindung, wie sie auch bei einer durchgehenden Schweißraupe erzeugt wird, angestrebt wird. Bei äußerst dünnen Auflagen, z. B. mit einer Materialstärke im Bereich kleiner 120 µm besteht das Problem, dass die Oberfläche der Auflage durch die sich überlappenden Schweißpunkte beschädigt wird, da die Wärmeenergie zu hoch ist.

Die JP077332500 offenbart eine gattungsgemäße Zylinderkopfdichtung, bei der ebenfalls Schweißpunkte entlang der Brennkammeröffnung angeordnet sind, welche sich in zwei Reihen um die Brennkammeröffnung erstrecken.

Der Erfindung liegt die Aufgabe zugrunde, eine gattungsgemäße Zylinderkopfdichtung dahingehend zu verbessern, dass äußerst dünne Auflagen verwendbar sind, ohne das Einbußen hinsichtlich der Dichtfunktion auftreten.

Diese Aufgabe wird erfindungsgemäß durch die kennzeichnenden Merkmale des Patentanspruchs 1 gelöst. Vorteilhafte Ausgestaltungen der Erfindung sind in den Unteransprüchen dargelegt.

Durch die erfindungsgemäße Schweißnaht ist zwischen den einzelnen Schweißpunkten ein definierter Abstand gewährleistet, der so groß ist, dass sich die Schweißpunkte nicht überlappen. Auf diese Weise wird partiell weniger Wärmeenergie eingeleitet, wodurch sich die Auflage nicht verwirft. Obwohl die Schweißnaht im Gegensatz zu bekannten Zylinderkopfdichtungen in Umfangsrichtung nicht geschlossen ist, hat sich gezeigt, dass im Hinblick auf die Dichtfunktion keine Nachteile auftreten. Es hat sich gezeigt, dass es sogar ausreicht, den Abstand zwischen zwei Schweißpunkten so groß zu wählen, dass um eine Brennkammeröffnung herum nur zwei Schweißpunkte angeordnet sind.

Die Erfindung ist anhand eines Ausführungsbeispieles in der Zeichnung dargestellt und wird im folgenden näher erläutert. Es zeigen:
- Fig. 1: Draufsicht auf eine erfindungsgemäße Zylinderkopfdichtung
- Fig. 2: Ansicht gem. Schnittlinie II-II
- Fig. 3: Draufsicht gemäß Ausschnitt in Fig. 1

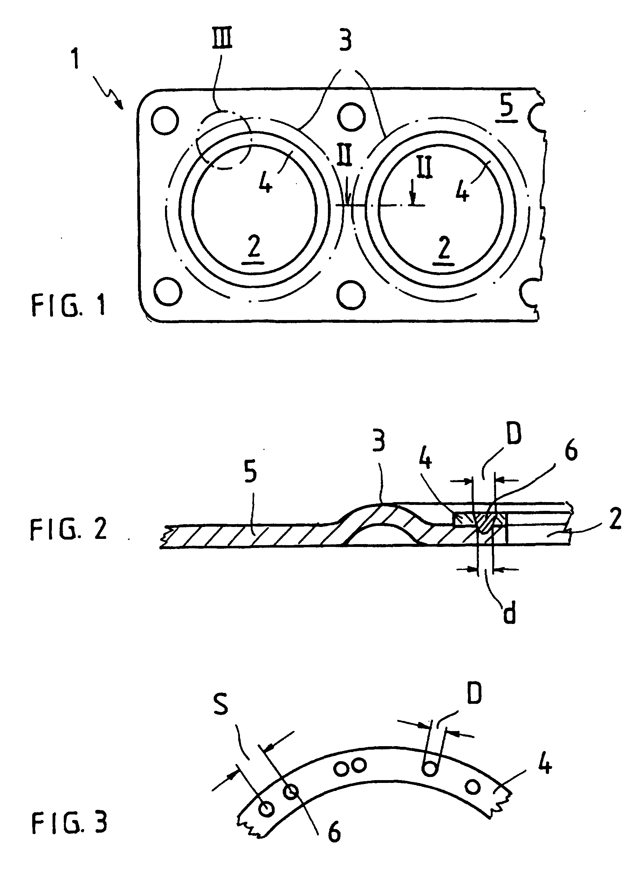

Die in der Figur 1 dargestellte Zylinderkopfdichtung 1 dient zur Abdichtung des Dichtungsspaltes zwischen dem Zylinderkopf und dem Zylinderblock einer Verbrennungskraftmaschine. Die Zylinderkopfdichtung 1 weist mehrere Brennkammeröffnungen 2 auf, die den Brennraumöffnungen der Verbrennungskraftmaschine angepaßt sind. Am Rand der Brennkammeröffnung 2 erstreckt sich eine Sicke 3. Die Zylinderkopfdichtung 1 besteht aus nur einer einzigen Grundplatte 5, es ist jedoch auch möglich, noch zusätzliche Metalllagen hinzuzufügen. Auf der Grundplatte 5 ist eine Auflage 4 aus einem metallischen Werkstoff aufgeschweißt.

Wie aus der Fig. 2 zu erkennen, ist die Schweißnaht so ausgebildet, dass sich zwei unterschiedliche Durchmesser ergeben. Die Schweißnaht ist als Punktschweißnaht ausgebildet. Der Schweißpunktdurchmesser D auf der Oberfläche der Auflage 4 ist größer als der Schweißpunktdurchmesser d in der Grundplatte 5.

In der Figur 3 sind die Schweißpunkte 6 in der Draufsicht vergrößert dargestellt. Der Abstand S zwischen den Mittelpunkten der Schweißpunkte benachbarter Schweißpunkte 6 ist so gewählt, dass die Schweißpunkte sich nicht überlappen, der Abstand S folgt der Bedingung S/D > 1.
Der Abstand S kann je nach Anforderung über den Umfang variieren. Es können beispielsweise zwei Schweißpunkte 6 relativ weit auseinander oder sehr nahe zusammen liegen. Auf diese Art und Weise können extrem dünne Auflagen 4 verschweißt werden, ohne dass die Oberflächen von Grundplatte 5 oder Auflage 4 beschädigt werden.

## Patentansprüche

1. Zylinderkopfdichtung (1) mit einer Grundplatte (5) aus Metall mit mindestens einer Brennkammeröffnung (2) und mit einer ringförmigen Auflage (4) aus Metall, die um die Brennkammeröffnung(2) herum angeordnet ist und mit der Grundplatte (5) verschweißt ist, wobei Schweißpunkte (6) nebeneinanderliegend angeordnet sind und alle Schweißpunkte (6) so ausgebildet sind, dass an einer Oberfläche der Grundplatte ein Schweißpunktdurchmesser d ausgebildet ist, der kleiner ist als der Schweißpunktdurchmesser D an einer Oberfläche der Auflage (4), wobei der Abstand S zwischen den Mittelpunkten benachbarter Schweißpunkte (6) größer ist als der Schweißpunktdurchmesser D auf der Oberfläche der Auflage (4) und der Bedingung S/D > 1 folgt, **dadurch gekennzeichnet, dass** die Auflagen (4) eine Materialstärke zwischen 50 µm und 120 µm aufweisen und der Schweißpunktdurchmesser D kleiner gleich 1 mm ist und dass die Schweißpunkte (6) sich in nur einer einzigen Reihe entlang der Brennkammeröffnung (2) erstrecken und die Schweißpunkte (6) mit einem Laser erzeugt sind.

## Claims

1. Cylinder head gasket (1) which has a metal base-plate (5) with at least one combustion chamber opening (2) and an annular metal overlay (4), which is arranged around the combustion chamber opening (2) and is welded to the base-plate (5), welding points (6) being arranged lying beside one another and all the welding points (6) being so configured that on a surface of the base-plate a welding point diameter d is formed which is smaller than the welding point diameter D on a surface of the overlay (4), the spacing S between the midpoints of adjacent welding points (6) being greater than the welding point diameter D on the surface of the overlay (4) and meeting the condition S/D > 1, **characterised in that** the overlays (4) have a material thickness of between 50 µm and 120 µm and the welding point diameter D is smaller than or equal to 1 mm, and **in that** the welding points (6) extend in only a single row along the combustion chamber opening (2) and the welding points (6) are produced by means of a laser.

## Revendications

1. Joint de culasse de cylindre (1) comprenant une plaque de base (5) en métal pourvue d'au moins une ouverture de chambre de combustion (2) et une couche annulaire (4) en métal, qui est disposée autour de l'ouverture de chambre de combustion (2) et qui est soudée à la plaque de base (5), des points de soudure (6) étant disposés les uns à côté des autres et tous les points de soudure (6) sont réalisés de telle sorte qu'au niveau d'une surface supérieure de la plaque de base un diamètre de point de soudure d est réalisé, qui est plus petit que le diamètre de point de soudure D au niveau d'une surface supérieure de la couche (4), l'écart S entre les centres de points de soudure adjacents (6) est supérieur au diamètre de point de soudure D sur la surface supérieure de la couche (4) et S satisfait la relation S/D>1, **caractérisé en ce que** les couches (4) présentent une épaisseur de matériau située entre 50 µm et 120 µm et le diamètre de point de soudure D est inférieur ou égal à 1 mm et **en ce que** les points de soudure (6) s'étendent le long de l'ouverture de chambre de combustion (2) sur seulement une seule rangée et les points de soudure (6) sont réalisés avec un laser.
